(19)

Europäisches
Patentamt
European
Patent Office
Office européen
des brevets

(11)  **EP 3 985 305 B1**

(12)  **EUROPEAN PATENT SPECIFICATION**

(45) Date of publication and mention
of the grant of the patent:
**04.03.2026  Bulletin 2026/10**

(21) Application number: **20840537.3**

(22) Date of filing: **07.04.2020**

(51) International Patent Classification (IPC):
***G09G 3/34*** *(2006.01)*        ***H05B 45/46*** *(2020.01)*

(52) Cooperative Patent Classification (CPC):
**H05B 45/46; G09G 3/3406;** G09G 2300/0426;
G09G 2320/0223; G09G 2330/021;
G09G 2330/028; Y02B 20/30

(86) International application number:
**PCT/KR2020/004668**

(87) International publication number:
**WO 2021/010572 (21.01.2021 Gazette 2021/03)**

(54) **BACKLIGHT UNIT AND DISPLAY DEVICE COMPRISING SAME**

RÜCKBELEUCHTUNGSEINHEIT UND ANZEIGEVORRICHTUNG DAMIT

UNITÉ DE RÉTROÉCLAIRAGE ET DISPOSITIF D'AFFICHAGE COMPRENANT CETTE DERNIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.07.2019  KR 20190084190**

(43) Date of publication of application:
**20.04.2022  Bulletin 2022/16**

(73) Proprietor: **Samsung Display Co., Ltd.
Yongin-si, Gyeonggi-do 17113 (KR)**

(72) Inventors:
• **LEE, Dae Sik
Hwaseong-si Gyeonggi-do 18437 (KR)**
• **HONG, Sung Chul
Asan-si Chungcheongnam-do 31471 (KR)**

• **LEE, Jun Pyo
Asan-si Chungcheongnam-do 31455 (KR)**
• **LEE, Ji Eun
Seoul 06730 (KR)**
• **HAN, Song Yi
Asan-si Chungcheongnam-do 31455 (KR)**

(74) Representative: **Walaski, Jan Filip
Venner Shipley LLP
200 Aldersgate
London EC1A 4HD (GB)**

(56) References cited:
CN-A- 104 793 820        CN-A- 109 116 626
KR-A- 20050 061 800      KR-A- 20130 047 463
KR-A- 20180 026 020      KR-B1- 100 600 332
KR-B1- 101 888 428       US-A1- 2010 295 876
US-A1- 2013 169 190      US-A1- 2020 074 917

## Description

### [Technical Field]

The present disclosure relates to a backlight unit and a display device comprising same.

### [Background Art]

As the information society develops, demands for display devices for displaying images are increasing in various forms. For example, display devices are being applied to various electronic devices such as smartphones, digital cameras, notebook computers, navigation devices, and smart televisions. The display devices may be flat panel display devices such as liquid crystal display devices, field emission display devices, and organic light emitting display devices.

Among them, a liquid crystal display device includes an array substrate including thin-film transistors, an upper substrate including color filters and/or a black matrix, and a liquid crystal layer disposed between the array substrate and the upper substrate. The liquid crystal display device is a device that displays an image by adjusting the arrangement state of the liquid crystal layer according to an electric field applied between two electrodes in a pixel area and adjusting the transmittance of light according to the arrangement state. US 2013/169190 A1 discloses a display device with an LED backlight unit. US 2010/295876 A1 discloses a display apparatus. CN 109 116 626 A discloses a backlight source and manufacturing method thereof. KR 2013 0047463 A discloses a driving apparatus for an LCD display device.

### [Disclosure]

### [Technical Problem]

Aspects of the present disclosure provide a backlight unit which can minimize power loss and heat generation of a sensing line or a light source driver and a display device including the backlight unit.

However, aspects of the present disclosure are not restricted to the one set forth herein. The above and other aspects of the present disclosure will become more apparent to one of ordinary skill in the art to which the present disclosure pertains by referencing the detailed description of the present disclosure given below.

### [Technical Solution]

According to the invention, there is provided a backlight unit according to claim 1, and a display device according to claim 10. Preferred features are set out in the dependent claims.

Other details of the present disclosure are included in the detailed description and the drawings.

### [Advantageous Effects]

In a backlight unit and a display device comprising same according to embodiments, sensing lines connected to a plurality of light source blocks disposed in each of a plurality of areas of a substrate may have different cross-sectional areas according to lengths of the sensing lines, respectively. Therefore, sensing lines connected to a plurality of light source blocks in one area may have the same resistance value, and the magnitude of a driving voltage applied to the light source blocks may be reduced. Accordingly, this can minimize power loss and heat generation of the sensing lines and a light source driver and improve the efficiency of the backlight unit.

In a backlight unit and a display device comprising same according to embodiments, sensing lines connected to a plurality of light source blocks disposed in each of a plurality of areas of a substrate may have the same cross-sectional area and length. Therefore, sensing lines connected to a plurality of light source blocks in one area may have the same resistance value. Accordingly, this can minimize power loss and heat generation of the sensing lines and a light source driver and improve the efficiency of the backlight unit.

However, the effects of the present disclosure are not limited to the aforementioned effects, and various other effects are included in the present specification.

### [Description of Drawings]

FIG. 1 is an exploded perspective view of a display device according to an embodiment;
FIG. 2 is a plan view of a backlight unit according to a first embodiment in the display device illustrated in FIG. 1;

FIG. 3 is an example diagram illustrating an area AA of FIG. 2 and a connection relationship in the area AA;

FIG. 4 is an example diagram for explaining resistance values of sensing lines illustrated in FIG. 3;

FIG. 5 is a circuit diagram of an example of the backlight unit illustrated in FIG. 2;

FIG. 6 is a circuit diagram illustrating a voltage drop of the backlight unit illustrated in FIG. 2;

FIG. 7 is a plan view of a backlight unit according to a second embodiment in the display device illustrated in FIG. 1;

FIG. 8 is an example diagram illustrating an area AB of FIG. 7 and a connection relationship in the area AB;

FIG. 9 is a circuit diagram of an example of the backlight unit illustrated in FIG. 7;

FIG. 10 is a circuit diagram illustrating a voltage drop of the backlight unit illustrated in FIG. 7;

FIG. 11 is a plan view of a backlight unit according to a third embodiment in the display device illustrated in FIG. 1;

FIG. 12 is an example diagram illustrating an area AC of FIG. 11 and a connection relationship in the area AC;

FIG. 13 is another example diagram illustrating the area AC of FIG. 11 and the connection relationship in the area AC;

FIG. 14 is a circuit diagram of an example of the backlight unit illustrated in FIG. 11;

FIG. 15 is a circuit diagram illustrating a voltage drop of the backlight unit illustrated in FIG. 11;

FIG. 16 is an exploded perspective view of a display device according to an embodiment;

FIG. 17 is a plan view of a backlight unit according to a fourth embodiment in the display device illustrated in FIG. 16;

FIG. 18 is an example diagram illustrating an area AD of FIG. 16 and a connection relationship in the area AD; and

FIG. 19 is another example diagram illustrating the area AD of FIG. 16 and the connection relationship in the area AD.

## [Mode for Invention]

The invention will now be described more fully hereinafter with reference to the accompanying drawings, in which preferred embodiments of the invention are shown. This invention may, however, be embodied in different forms and should not be construed as limited to the embodiments set forth herein. Rather, these embodiments are provided so that this disclosure will be thorough and complete, and will fully convey the scope of the invention to those skilled in the art.

It will also be understood that when a layer is referred to as being "on" another layer or substrate, it can be directly on the other layer or substrate, or intervening layers may also be present. The same reference numbers indicate the same components throughout the specification.

It will be understood that, although the terms "first," "second," etc. may be used herein to describe various elements, these elements should not be limited by these terms. These terms are only used to distinguish one element from another element. For instance, a first element discussed below could be termed a second element without departing from the teachings of the invention. Similarly, the second element could also be termed the first element.

Hereinafter, embodiments will be described with reference to the accompanying drawings.

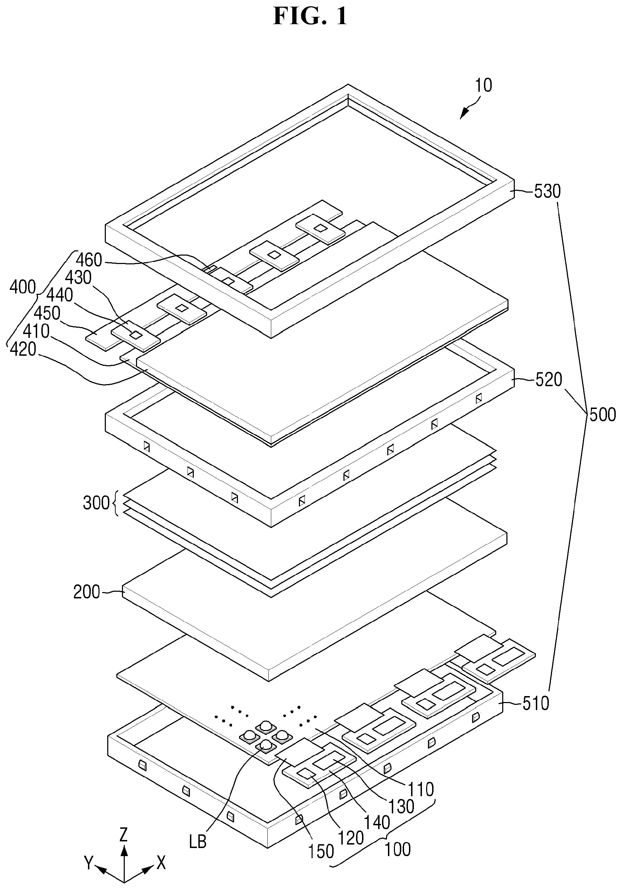

FIG. 1 is an exploded perspective view of a display device according to an embodiment.

In the present specification, "above," "top," and "upper surface" refer to an upward direction of the display device 10, that is, a Z-axis direction, and "under," "bottom," and "lower surface" refer to a downward direction of the display device 10, that is, a direction opposite to the Z-axis direction. In addition, "left," "right," "upper," and "lower" refer to directions when the display device 10 is seen in plan view. For example, "left" refers to a direction opposite to an X-axis direction, "right" refers to the X-axis direction, "upper" refers to a Y-axis direction, and "lower" refers to a direction opposite to the Y-axis direction.

Referring to FIG. 1, the display device 10 according to the embodiment includes a backlight unit 100, a diffuser plate 200, an optical sheet unit 300, a display panel 400, and a case member 500.

The backlight unit 100 may include a substrate 110, power supply units 120, light source drivers 130, printed circuit boards 140, and a plurality of flexible films 150.

The substrate 110 may include a plurality of light source blocks LB, each including at least one light emitting diode (LED), mini-LED, or micro-LED. For example, the mini-LED may be a small LED whose light source chip has a size of 100 to 500 $\mu$m, and a light source chip of the micro-LED may have a size of 5 to 10 $\mu$m, but the present disclosure is not necessarily limited thereto. The light source blocks LB may be arranged on the substrate 110 to correspond to a display area of the display panel 400. Since the light source blocks LB include mini-LEDs or micro-LEDs as described above, they may have a thickness similar to that in an edge type backlight structure even in a direct type backlight structure, may have a high dynamic range (HDR) that cannot be implemented in the edge type backlight structure, and can easily perform local dimming.

The power supply units 120 may be mounted on the printed circuit boards 140 disposed on at least one side of the substrate 110 to supply driving voltages to the light source blocks LB. Specifically, the power supply units 120 may receive feedback voltages from the light source drivers 130, generate driving voltages based on the feedback voltages, and supply the driving voltages to the light source blocks LB. For example, each of the power supply units 120 may include at least one inductor, a capacitor, a diode, a transistor, an integrated circuit and a voltage source, but the present disclosure is not necessarily limited thereto.

In addition, the power supply units 120 may supply driving voltages to the light source blocks LB through power supply lines, and the power supply lines may be connected from the power supply units 120 to the light source blocks LB via the flexible films 150.

The light source drivers 130 may be mounted on the printed circuit boards 140 disposed on at least one side of the substrate 110 to drive the light source blocks LB. Specifically, the light source drivers 130 may control a current flowing through the light source blocks LB by controlling switching transistors connected in series to the light source blocks LB. For example, the light source drivers 130 may control each of the light source blocks LB independently to easily perform local dimming, improve a contrast ratio, and reduce power consumed by the light source blocks LB.

In addition, the light source drivers 130 may be connected to the light source blocks LB through sensing lines, and the sensing lines may be connected from the light source blocks LB to the light source drivers 130 via the flexible films 150. For example, at least some of the sensing lines may be finely patterned and highly densely arranged on the substrate 110.

The power supply units 120 and the light source drivers 130 may be mounted on the printed circuit boards 140. In addition, the power supply lines connected to the power supply units 120 and the sensing lines connected to the light source drivers 130 may be further mounted on the printed circuit boards 140. According to an example, the printed circuit boards 140 may be bent together with the flexible films 150 to reduce a bezel area of the display device 10. For example, the printed circuit boards 140 may be implemented as a single substrate on which all of the power supply units 120 and the light source drivers 130 can be mounted or may be implemented as a plurality of substrates on which a plurality of groups into which the power supply units 120 and the light source drivers 130 are divided can be mounted, respectively. Here, the printed circuit boards 140 may be changed to various configurations according to the arrangement structure of the power supply units 120 and the light source drivers 130 and a method of driving the light source blocks LB.

Each of the flexible films 150 may connect a printed circuit board 140 to the substrate 110. Specifically, terminals provided on a side of each of the flexible films 150 may be attached to a printed circuit board 140 by a film attaching process, and terminals provided on the other side of each of the flexible films 150 may be attached to the substrate 110 by a film attaching process. According to an example, each of the flexible films 150 may be bent to reduce the bezel area of the display device 10. For example, each of the flexible films 150 may be formed of a tape carrier package or a chip on flexible board or a chip on film.

The diffuser plate 200 may be disposed on a front surface of the backlight unit 100. Specifically, the diffuser plate 200 may be supported by an upper surface of a bottom case 510, and the backlight unit 100 may be disposed on a bottom surface of the bottom case 510, thereby forming a predetermined space between the diffuser plate 200 and the backlight unit 100. According to an embodiment, the diffuser plate 200 may be made of a material having a higher light diffusivity than the optical sheet unit 300. Since the diffuser plate 200 is interposed between the backlight unit 100 and the optical sheet unit 300 as described above, the diffusion of light emitted from the light source blocks LB can be improved.

The optical sheet unit 300 may be disposed on a rear surface of the display panel 400. For example, the optical sheet unit 300 may be interposed between the diffuser plate 200 and the display panel 400 to improve luminance characteristics of light emitted from the light source blocks LB. According to an example, the optical sheet unit 300 may be a composite optical sheet having both a function of diffusing incident light and a function of condensing the diffused light.

According to an example, the optical sheet unit 300 may be attached to the rear surface of the display panel 400 by a lamination process using a transparent bonding member as a medium. Here, the transparent bonding member may be an optically clear adhesive (OCA), an optically clear resin (OCR), a porous OCA, or a porous OCR. Optionally, when the optical sheet unit 300 is formed of one composite optical sheet, it may further include a plurality of light condensing patterns including prism or lenticular patterns.

The display panel 400 may include a lower substrate 410, an upper substrate 420, a plurality of flexible films 430, a plurality of source driving circuits 440, a source circuit board 450, and a timing controller 460.

The lower substrate 410 and the upper substrate 420 may be made of glass or plastic. The lower substrate 410 may be larger in size than the upper substrate 420. Therefore, the flexible films 430 may be attached to an edge of an upper surface of the lower substrate 410, which is not covered by the upper substrate 420, by a film attaching process. Here, the upper surface of the lower substrate 410 may be a surface facing the upper substrate 420.

Signal lines and pixels may be provided on the upper surface of the lower substrate 410 of the display panel 400. For example, the signal lines may include data lines and gate lines intersecting each other, a common voltage line for supplying a common voltage to a common electrode, and scan control lines for supplying control signals to a gate driving circuit.

A black matrix and color filters may be provided on a lower surface of the upper substrate 420 of the display panel 400. Here, the lower surface of the upper substrate 420 may be a surface facing the lower substrate 410. For another example, when the display panel 400 is formed using a color filter on TFT array (COT), the black matrix and the color filters may be provided on the upper surface of the lower substrate 410.

The common electrode may be provided on the lower surface of the upper substrate 420 in a vertical electric field driving method such as a twisted nematic (TN) mode and a vertical alignment (VA) mode and may be provided on the upper surface of the lower substrate 410 in a horizontal electric field driving method such as an in plane switching (IPS) mode and a fringe field switching (FFS) mode. In addition, an alignment layer for setting a pretilt angle of liquid crystals may be formed on the upper surface of the lower substrate 410 and the lower surface of the upper substrate 420 of the display panel 400.

A lower polarizing plate may be attached to a lower surface of the lower substrate 410 of the display panel 400. A transparent electrode may be formed on the entire upper surface of the upper substrate 420 of the display panel 400, and an upper polarizing plate may be attached onto the transparent electrode. Here, the transparent electrode may be connected to the ground in order to discharge static electricity generated in the upper substrate 420 of the display panel 400.

The display panel 400 may further include a liquid crystal layer (not illustrated) interposed between the lower substrate 410 and the upper substrate 420. The liquid crystal layer may be driven by an electric field generated by a potential difference between a data voltage supplied to each pixel electrode and the common voltage supplied to the common electrode. Accordingly, the transmitted amount of light incident from the backlight unit 100 may be adjusted.

Each of the flexible films 430 may connect the source circuit board 450 and the lower substrate 410. Specifically, input terminals provided on a side of each of the flexible films 430 may be attached to the source circuit board 450 by a film attaching process, and output terminals provided on the other side of each of the flexile films 430 may be attached to a pad part of the lower substrate 410 by a film attaching process. According to an embodiment, each of the flexible films 430 may be bent to reduce the bezel area of the display device 10. For example, each of the flexible films 430 may be formed of a tape carrier package or a chip on flexible board or a chip on film.

The source driving circuits 440 may be individually mounted on the flexible films 430, respectively. Each of the source driving circuits 440 may receive pixel data and a data control signal from the timing controller 460, convert the pixel data into an analog data signal for each pixel according to the data control signal, and supply the data signal to a corresponding data line.

The source circuit board 450 may support the timing controller 460 and transmit signals and power output from the timing controller 460. The source circuit board 450 may provide signals and driving power supplied from the timing controller 460 to the source driving circuits 440 and a scan driver (not illustrated) in order to display an image in each pixel. To this end, signal transmission wirings and various power wirings may be provided on the source circuit board 450. For example, one or more source circuit boards 450 may be provided according to the number of flexible films 430.

The timing controller 460 may be mounted on the source circuit board 450 and may receive image data and a timing synchronization signal provided from a display driving system through a user connector provided on the source circuit board 450. The timing controller 460 may generate pixel data by aligning the image data to suit a pixel arrangement structure based on the timing synchronization signal and provide the generated pixel data to a corresponding source driving circuit 440. In addition, the timing controller 460 may generate each of a data control signal and a scan control signal based on the timing synchronization signal, control the driving timing of each of the source driving circuits 440 through the data control signal, and control the driving timing of the scan driver through the scan control signal. Here, the scan control signal may be supplied to the scan driver through a first or/and last flexible film among the flexible films 430 and a non-display area.

The case member 500 may include the bottom case 510, a support frame 520, and a top case 530.

The bottom case 510 may be manufactured as a quadrangular metal frame to accommodate the backlight unit 100. Specifically, the backlight unit 100 may be disposed on the bottom surface of the bottom case 510, and the diffuser plate 200 may be disposed on the upper surface of the bottom case 510, thereby forming a predetermined space between the backlight unit 100 and the diffuser plate 200. In addition, the bottom case 510 may be manufactured using a high-strength steel sheet to support and protect the backlight unit 100. For example, the bottom case 510 may be manufactured using an electro-galvanized steel sheet (EGI), stainless steel (SUS), galvalume (SGLC), an aluminum-plated steel sheet (aka ALCOSTA), a tin-plated steel sheet (SPTE), or the like.

The support frame 520 may support the lower surface of the lower substrate 410 of the display panel 400. The support frame 520 may be coupled to the bottom case 510 through a coupling member. For example, the support frame 520 may be made of the same material as the bottom case 510, but the present disclosure is not necessarily limited thereto.

According to an example, the support frame 520 may be integrated with the bottom case 510. According to another example, the support frame 520 may be omitted, and the top case 530 may be directly coupled to the bottom case 510.

The top case 530 may cover edges of the display panel 400, upper and side surfaces of the support frame 520, and side surfaces of the bottom case 510. For example, the top case 530 may be made of the same material as the bottom case 510 or the support frame 520, but the present disclosure is not necessarily limited thereto. The top case 530 may be coupled to the support frame 520 through coupling members such as hooks or screws.

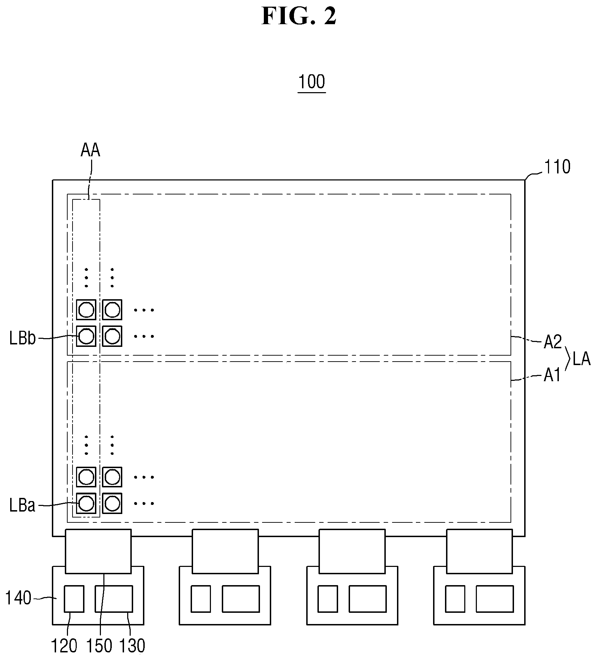

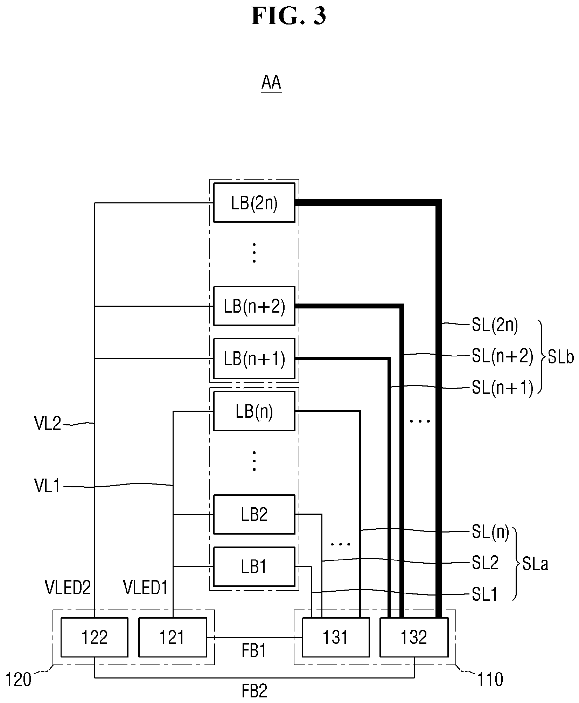

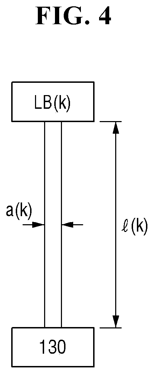

FIG. 2 is a plan view of a backlight unit according to a first embodiment in the display device illustrated in FIG. 1. FIG. 3 is an example diagram illustrating an area AA of FIG. 2 and a connection relationship in the area AA. FIG. 4 is an example diagram for explaining resistance values of sensing lines illustrated in FIG. 3.

Referring to FIGS. 2 through 4, a substrate 110 may include a light emitting area LA composed of a plurality of light source blocks LB. In addition, the light emitting area LA may include a first area A1 including a plurality of light source blocks LBa and a second area A2 including a plurality of light source blocks LBb. According to an example, the first area A1 may be closer to power supply units 120 and light source drivers 130 mounted on printed circuit boards 140 than the second area A2. In other words, a distance between the light source blocks LBa of the first area A1 and the light source drivers 130 may be smaller than a distance between the light source blocks LBb of the second area A2 and the light source drivers 130. Therefore, a length of each of first sensing lines SLa connected between the light source blocks LBa of the first area A1 and a first light source driver 131 may be smaller than a length of each of second sensing lines SLb connected between the light source blocks LBb of the second area A2 and a second light source driver 132.

Each of the power supply units 120 may include first and second power supply units 121 and 122, and each of the light source drivers 130 may include the first and second light source drivers 131 and 132.

The first power supply unit 121 may supply a first driving voltage VLED1 to the light source blocks LBa of the first area A1 through first power supply lines VL1, and the second power supply unit 122 may supply a second driving voltage VLED2 to the light source blocks LBb of the second area A2 through second power supply lines VL2. Specifically, the first power supply unit 121 may receive a first feedback voltage FB1 from the first light source driver 131 and generate the first driving voltage VLED1 based on the first feedback voltage FB1. The second power supply unit 122 may receive a second feedback voltage FB2 from the second light source driver 132 and generate the second driving voltage VLED2 based on the second feedback voltage FB2.

According to an example, the first power supply lines VL1 respectively connected to first through $n^{th}$ light source blocks LB1 through LB(n) may have the same resistance value, and the second power supply lines VL2 respectively connected to $(n+1)^{th}$ through $(2n)^{th}$ light source blocks LB(n+1) through LB(2n) may have the same resistance value. Therefore, the backlight unit 100 according to the present disclosure can minimize power consumed in the first and second power supply lines VL1 and VL2.

The first light source driver 131 may control a current flowing through the light source blocks LBa of the first area A1 through the first sensing lines SLa, and the second light source driver 132 may control a current flowing through the light source blocks LBb of the second area A2 through the second sensing lines SLb.

According to an example, the number of light source blocks LBa of the first area A1 may be, but not necessarily, equal to the number of light source blocks LBb of the second area A2. For example, the first area A1 may include the first through $n^{th}$ (where n is a natural number of 2 or more) light source blocks LB1 through LB(n), and the second area A2 may include the $(n+1)^{th}$ through $(2n)^{th}$ light source blocks LB(n+1) through LB(2n). In addition, the first through $n^{th}$ light source blocks LB1 through LB(n) may be connected to the first light source driver 131 through first sensing lines SL1 through SL(n), respectively, and the $(n+1)^{th}$ through $(2n)^{th}$ light source blocks LB(n+1) through LB(2n) may be connected to the second light source driver 132 through second sensing lines SL(n+1) through SL(2n), respectively. That is, a length of each of the first sensing lines SL1 through SL(n) may be smaller than a length of each of the second sensing lines SL(n+1) through SL(2n).

For example, the first sensing line SL1 connected to the first light source block LB1 may be shorter than the first sensing line SL2 connected to the second light source block LB2. Like this, the first sensing lines SL1 through SL(n) may be relatively long or short according to distances between the first through $n^{th}$ light source blocks LB1 through LB(n) and the first light source driver 131, respectively. In addition, the second sensing line SL(n+1) connected to the $(n+1)^{th}$ light source block LB(n+1) may be longer than each of the first sensing lines SL1 through SL(n) and may be shorter than the second sensing line SL(n+2) connected to the $(n+2)^{th}$ light source block LB(n+2). Like this, the second sensing lines SL(n+1) through SL(2n) may be relatively long or short according to distances between the $(n+1)^{th}$ through $(2n)^{th}$ light source blocks LB(n+1) through LB(2n) and the second light source driver 132, respectively.

In FIG. 4, one sensing line SL(k) connecting one light source block LB(k) (where k is a natural number of 1 to 2n) among the first through $(2n)^{th}$ light source blocks LB1 through LB(2n) to a light source driver 130 may have its own resistance as shown in Equation 1 below:

$$R = \rho \frac{l}{a} \qquad \dots(1).$$

In Equation 1, R is self-resistance of a line (or wiring), p is specific resistance according to the material of the line, $l$ is the length of the line, and $a$ is the cross-sectional area of the line. Therefore, the resistance of the sensing line SL(k) may decrease as the cross-sectional area a(k) increases and may increase as the length l(k) increases.

The first sensing lines SL1 through SLn may have the same first resistance value. According to an example, the first sensing lines SL1 through SL(n) may have different lengths according to positions of the first through $n^{th}$ light source blocks LB1 through LB(n), respectively. Since the first sensing lines SL1 through SL(n) have different cross-sectional areas according to the lengths of the first sensing lines SL1 through SL(n), respectively, they may have the same first resistance value. In addition, since the first sensing lines SL1 through SL(n) have cross-sectional areas proportional to the distances between the light source blocks LBa of the first area A1 and the first light source driver 131, respectively, they may have the same first resistance value.

The second sensing lines SL(n+1) through SL(2n) may have the same second resistance value. According to an example, the second sensing lines SL(n+1) through SL(2n) may have different lengths according to positions of the $(n+1)^{th}$ through $(2n)^{th}$ light source blocks LB(n+1) through LB(2n), respectively. Since the second sensing lines SL(n+1) through SL(2n) have different cross-sectional areas according to the lengths of the second sensing lines SL(n+1) through SL(2n), respectively, they may have the same second resistance value. In addition, since the second sensing lines SL(n+1) through SL(2n) have cross-sectional areas proportional to the distances between the light source blocks LBb of the second area A2 and the second light source driver 132, respectively, they may have the same second resistance value.

Since the first sensing lines SL1 through SL(n) have the same resistance value as described above, the first driving voltage VLED1 provided from the first power supply unit 121 may drop to the same voltage value in each of the first through $n^{th}$ light source blocks LB1 through LB(n), each of the first sensing lines SL1 through SL(n), and the first light source driver 131. For example, a voltage that drops in each of the first light source block LB1, the first sensing line SL1 connected to the first light source block LB1, and the first light source driver 131 may be the same as a voltage that drops in each of the $n^{th}$ light source block LB(n), the first sensing line SL(n) connected to the $n^{th}$ light source block LB(n), and the first light source driver 131.

In addition, since the second sensing lines SL(n+1) through SL(2n) have the same second resistance value, the second driving voltage VLED2 provided from the second power supply unit 122 may drop to the same voltage value in each of the $(n+1)^{th}$ through $(2n)^{th}$ light source blocks LB(n+1) through LB(2n), each of the second sensing lines SL(n+1) through SL(2n), and the second light source driver 132. For example, a voltage that drops in each of the $(n+1)^{th}$ light source block LB(n+1), the second sensing line SL(n+1) connected to the $(n+1)^{th}$ light source block LB(n+1), and the second light source driver 132 may be the same as a voltage that drops in each of the $(2n)^{th}$ light source block LB(2n), the second sensing line SL(2n) connected to the $(2n)^{th}$ light source block LB(2n), and the second light source driver 132.

If a plurality of sensing lines have different resistance values and the same driving voltage is applied to a plurality of light source blocks, different voltages may drop in the sensing lines, respectively. Here, a relatively high voltage drop may occur in some sensing lines having a relatively high resistance value, and power consumption in these sensing lines may increase. In addition, a relatively low voltage drop may occur in some other sensing lines having a relatively low resistance value, and a relatively high voltage drop may occur in the light source driver 131 connected to these sensing lines. Therefore, the light source driver in which a high voltage drop occurs may generate heat, thereby deteriorating the efficiency of the backlight unit.

Therefore, in order to solve the above problem, in the backlight unit 100 according to the present disclosure, the first sensing lines SL1 through SL(n) may have the same first resistance value, and the second sensing lines SL(n+1) through SL(2n) may have the same second resistance value. Here, the second sensing lines SL(n+1) through SL(2n) may be longer than the first sensing lines SL1 through SL(n), respectively, and the second resistance value may be higher than the first resistance value. In addition, the first power supply unit 121 may supply the first driving voltage VLED1 to each of the first through $n^{th}$ light source blocks LB1 through LB(n) connected to the first sensing lines SL1 through SL(n), respectively, and the second power supply unit 122 may supply the second driving voltage VLED2 higher than the first driving voltage VLED1 to each of the $(n+1)^{th}$ through $(2n)^{th}$ light source blocks LB(n+1) through LB(2n) connected to the second sensing lines SL(n+1) through SL(2n), respectively. Therefore, in the backlight unit 100 according to the present disclosure, power consumed in the first sensing lines SL1 through SL(n) and the second sensing lines SL(n+1) through SL(2n) can be minimized, and the efficiency of the backlight unit 100 can be improved by preventing heat generation of the first and second light source drivers 131 and 132.

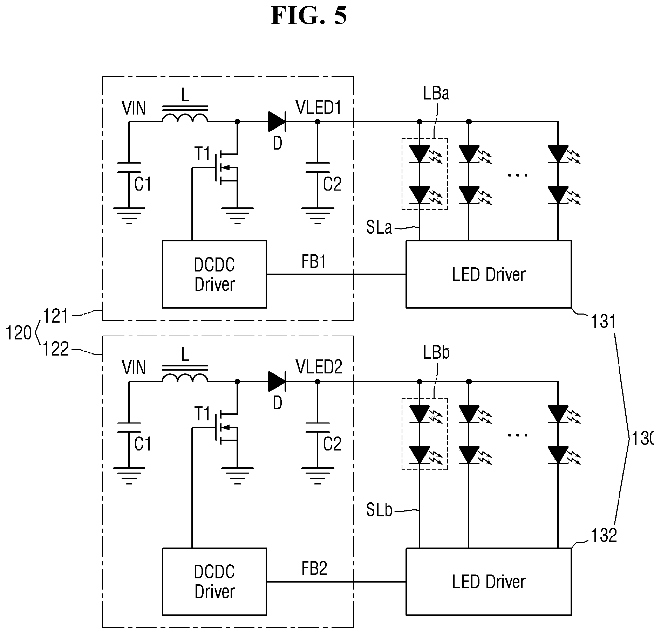

FIG. 5 is a circuit diagram of an example of the backlight unit illustrated in FIG. 2.

Referring to FIG. 5, the first power supply unit 121 may output the first driving voltage VLED1 by boosting a direct current (DC) input voltage VIN. According to an example, the first power supply unit 121 may include a driving voltage controller DC-DC Driver. The driving voltage controller DC-DC Driver may turn on a first transistor T1 in response to the first feedback voltage FB1 received from the first light source driver 131. Here, the driving voltage controller DC-DC Driver may determine the magnitude of the first driving voltage VLED1 by adjusting the turn-on time of the first transistor T1 based on the first feedback voltage FB1. For example, when receiving a relatively low first feedback voltage FB1, the driving voltage controller DC-DC Driver may increase the magnitude of the first driving voltage VLED1 by increasing the turn-on time of the first transistor T1. In addition, when receiving a relatively high first feedback voltage FB1, the driving voltage controller DC-DC Driver may reduce the magnitude of the first driving voltage VLED1 by reducing the turn-on time of the first transistor T1. The first driving voltage VLED1 thus generated may be supplied in parallel to the light source blocks LBa disposed in the first area A1. In addition, the first driving voltage VLED1 may be dropped by each of the first through $n^{th}$ light source blocks LBa, each of the first sensing lines SLa, and the first light source driver 131.

The second power supply unit 122 may output the second driving voltage VLED2 by boosting a DC input voltage VIN. According to an example, the second power supply unit 122 may include a driving voltage controller DC-DC Driver. The driving voltage controller DC-DC Driver may turn on a first transistor T1 in response to the second feedback voltage FB2 received from the second light source driver 132. Here, the driving voltage controller DC-DC Driver may determine the magnitude of the second driving voltage VLED2 by adjusting the turn-on time of the first transistor T1 based on the second feedback voltage FB2. For example, when receiving a relatively low second feedback voltage FB2, the driving voltage controller DC-DC Driver may increase the magnitude of the second driving voltage VLED2 by increasing the turn-on time of the first transistor T1. In addition, when receiving a relatively high second feedback voltage FB2, the driving voltage controller DC-DC Driver may reduce the magnitude of the second driving voltage VLED2 by reducing the turn-on time of the first transistor T1. The second driving voltage VLED2 thus generated may be supplied in parallel to the light source blocks LBb disposed in the second area A2. In addition, the second driving voltage VLED2 may be dropped by each of the $(n+1)^{th}$ through $(2n)^{th}$ light source blocks LBb, each of the second sensing lines SLb, and the second light source driver 132.

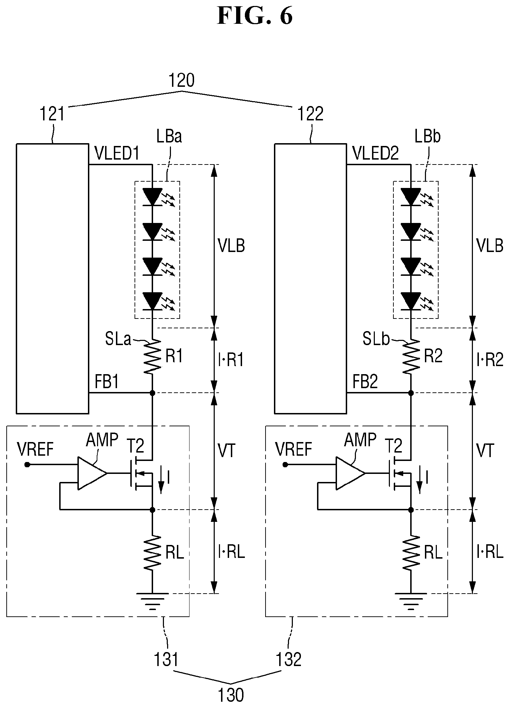

FIG. 6 is a circuit diagram illustrating a voltage drop of the backlight unit illustrated in FIG. 2.

Referring to FIG. 6, the first driving voltage VLED1 may be dropped by each of the first through $n^{th}$ light source blocks LBa, each of the first sensing lines SLa, and the first light source driver 131. Specifically, the first light source driver 131 may include a second transistor T2 and an amplifier AMP connected to a gate electrode of the second transistor T2. A first terminal of the amplifier AMP may receive a reference voltage VREF, a second terminal of the amplifier AMP may be connected to a source electrode of the second transistor T2, and an output terminal of the amplifier AMP may be connected to the gate electrode of the second transistor T2. Therefore, the first light source driver 131 may control the turn-on of the second transistor T2 so that a current $I$ of a certain magnitude flows through each of the first through $n^{th}$ light source blocks LBa, each of the first sensing lines SLa, and the first light source driver 131. Like this, the first light source driver 131 may function as a current source.

The second driving voltage VLED2 may be dropped by each of the $(n+1)^{th}$ through $(2n)^{th}$ light source blocks LBb, each of the second sensing lines SLb, and the second light source driver 132. Specifically, the second light source driver 132 may include a second transistor T2 and an amplifier AMP connected to a gate electrode of the second transistor T2. The second light source driver 132 may control the turn-on of the second transistor T2 through the amplifier AMP so that a current $I$ of a certain magnitude flows through each of the $(n+1)^{th}$ through $(2n)^{th}$ light source blocks LBb, each of the second sensing lines SLb, and the second light source driver 132. Like this, the second light source driver 132 may function as a current source.

For example, the first driving voltage VLED1 may be dropped by a voltage VLB applied to each of the first through $n^{th}$ light source blocks LBa, a voltage I*R1 applied to the first sensing lines SLa, a voltage VT applied to the second transistor T2, and a voltage I*RL applied to a load resistor RL (VLED1=VLB+I*R1+VT+I*RL). Like this, the first driving voltage VLED1 supplied in parallel to the first through $n^{th}$ light source blocks LBa may drop to the same magnitude in all the first sensing lines SLa.

In addition, the second driving voltage VLED2 may be dropped by a voltage VLB applied to each of the $(n+1)^{th}$ through $(2n)^{th}$ light source blocks LBb, a voltage I*R2 applied to the second sensing lines SLb, a voltage VT applied to the second transistor T2, and a voltage I*RL applied to a load resistor RL (VLED2=VLB+I*R2+VT+I*RL). Like this, the second driving voltage VLED2 supplied in parallel to the $(n+1)^{th}$ through $(2n)^{th}$ light source blocks LBb may drop to the same magnitude in all the second sensing lines SLb.

Therefore, a difference between the first and second driving voltages VLED1 and VLED2 may correspond to a difference (VLED2-VLED1=I*R2-I*R1) between the voltage I*R1 applied to the first sensing lines SLa and the voltage I*R2 applied to the second sensing lines SLb.

As described above, since the first area A1 of the substrate 110 is disposed closer to the power supply units 120 and the light source drivers 130 than the second area A2, the first sensing lines SL1 through SL(n) may have the same first resistance value R1, the second sensing lines SL(n+1) through SL(2n) may have the same second resistance value R2, and the first resistance value R1 may be designed to be smaller than the second resistance value R2.

Therefore, the first power supply unit 121 may supply the first driving voltage VLED1 smaller than the second driving voltage VLED2 to the first through $n^{th}$ light source blocks LB1 through LB(n) having the first resistance value R1, thereby minimizing power consumed in the first sensing lines SL1 through SL(n) and preventing heat generation of the first light source driver 131.

Likewise, the second power supply unit 122 may supply the second driving voltage VLED2 to each of the $(n+1)^{th}$ through $(2n)^{th}$ light source blocks LB(n+1) through LB(2n) respectively connected to the second sensing lines SL(n+1) through SL(2n) having the second resistance value R2, thereby minimizing power consumed in the second sensing lines SL(n+1) through SL(2n) and preventing heat generation of the second light source driver 132.

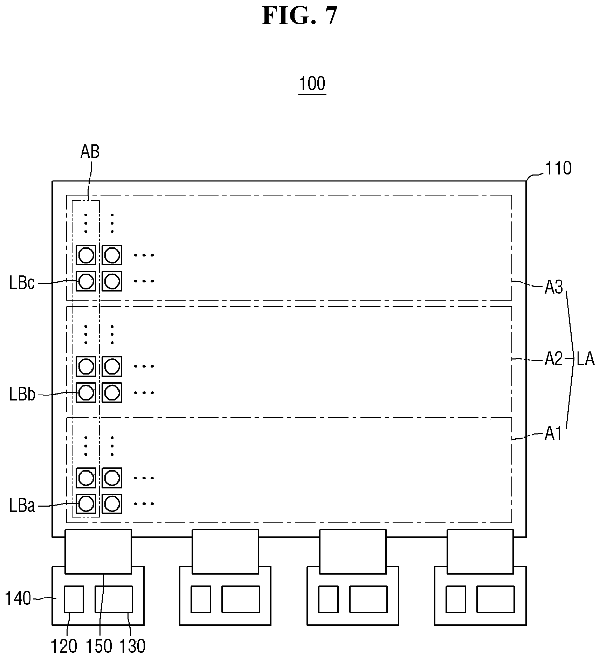

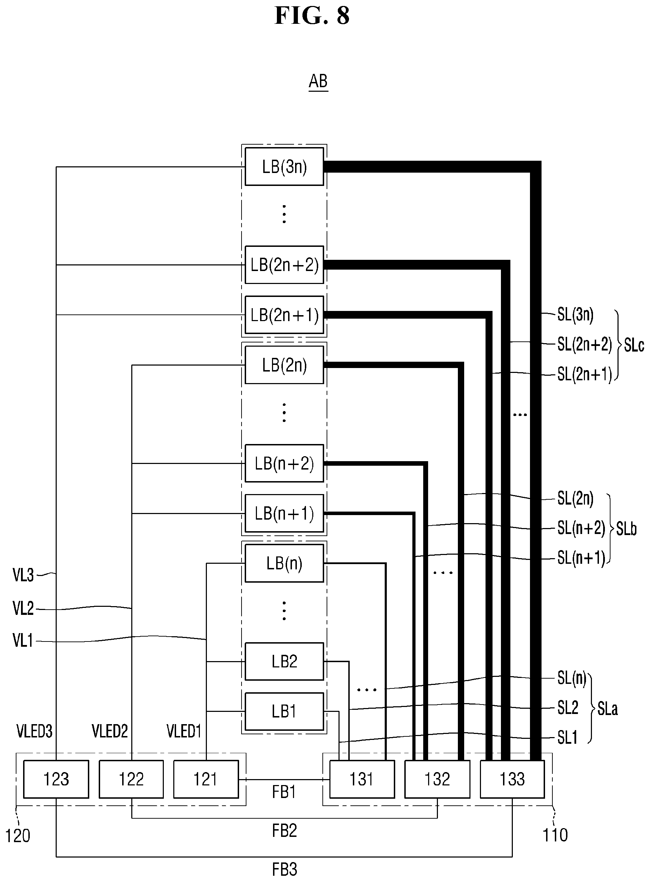

FIG. 7 is a plan view of a backlight unit according to a second embodiment in the display device illustrated in FIG. 1. FIG. 8 is an example diagram illustrating an area AB of FIG. 7 and a connection relationship in the area AB. The same elements as those described above will be briefly described or will not be described below.

Referring to FIGS. 7 and 8, a substrate 110 may include a light emitting area LA composed of a plurality of light source blocks LB. In addition, the light emitting area LA may include a first area A1 including a plurality of light source blocks LBa, a second area A2 including a plurality of light source blocks LBb, and a third area A3 including a plurality of light source blocks LBc. According to an example, the first area A1 may be closer to power supply units 120 and light source drivers 130 mounted on printed circuit boards 140 than the second area A2 and the third area A3, and the second area A2 may be closer to the power supply units 120 and the light source drivers 130 than the third area A3. In other words, a distance between the light source blocks LBa of the first area A1 and the light source drivers 130 may be smaller than a distance between the light source blocks LBb or LBc of each of the second area A2 and the third area A3 and the light source drivers 130. Therefore, a length of each of first sensing lines SLa connected between the light source blocks LBa of the first area A1 and a first light source driver 131 may be smaller than a length of each of second sensing lines SLb connected between the light source blocks LBb of the second area A2 and a second light source driver 132. In addition, the length of each of the second sensing lines SLb connected between the light source blocks LBb of the second area A2 and the second light source driver 132 may be smaller than a length of each of third sensing lines SLc connected between the light source blocks LBc of the third area A3 and a third light source driver 133.

Each of the power supply units 120 may include first through third power supply units 121 through 123, and each of the light source drivers 130 may include the first through third light source drivers 131 through 133.

The first power supply unit 121 may generate a first driving voltage VLED1 based on a first feedback voltage FB1 and supply the first driving voltage VLED1 to the light source blocks LBa of the first area A1 through first power supply lines VL1, the second power supply unit 122 may generate a second driving voltage VLED2 based on a second feedback voltage FB2 and supply the second driving voltage VLED2 to the light source blocks LBb of the second area A2 through second power supply lines VL2, and the third power supply unit 123 may generate a third driving voltage VLED3 based on a third feedback voltage FB3 and supply the third driving voltage VLED3 to the light source blocks LBc of the third area A3 through third power supply lines VL3.

The first light source driver 131 may control a current flowing through the light source blocks LBa of the first area A1 through the first sensing lines SLa, the second light source driver 132 may control a current flowing through the light source blocks LBb of the second area A2 through the second sensing lines SLb, and the third light source driver 133 may control a current flowing through the light source blocks LBc of the third area A3 through the third sensing lines SLc.

For example, the first area A1 may include first through $n^{th}$ (where n is a natural number of 2 or more) light source blocks LB1 through LB(n), the second area A2 may include $(n+1)^{th}$ through $(2n)^{th}$ light source blocks LB(n+1) through LB(2n), and the third area A3 may include $(2n+1)^{th}$ through $(3n)^{th}$ light source blocks LB(2n+1) through LB(3n). In addition, the first through $n^{th}$ light source blocks LB1 through LB(n) may be connected to the first light source driver 131 through first sensing lines SL1 through SL(n), respectively, the $(n+1)^{th}$ through $(2n)^{th}$ light source blocks LB(n+1) through LB(2n) may be connected to the second light source driver 132 through second sensing lines SL(n+1) through SL(2n), respectively, and the $(2n+1)^{th}$ through $(3n)^{th}$ light source blocks LB(2n+1) through LB(3n) may be connected to the third light source driver 133 through third sensing lines SL(2n+1) through SL(3n), respectively. That is, a length of each of the first sensing lines SL1 through SL(n) may be smaller than a length of each of the second sensing lines SL(n+1) through SL(2n) or a length of each of the third sensing lines SL(2n+1) through SL(3n).

Since the first sensing lines SL1 through SL(n) have different cross-sectional areas according to the lengths of the first sensing lines SL1 through SL(n), respectively, they may have the same first resistance value. Likewise, since the second sensing lines SL(n+1) through SL(2n) have different cross-sectional areas according to the lengths of the second sensing lines SL(n+1) through SL(2n), respectively, they may have the same second resistance value. In addition, since the third sensing lines SL(2n+1) through SL(3n) have different cross-sectional areas according to the lengths of the third sensing lines SL(2n+1) through SL(3n), respectively, they may have the same third resistance value.

Since the first sensing lines SL1 through SL(n) have the same first resistance value as described above, the first driving voltage VLED1 provided from the first power supply unit 121 may drop to the same voltage value in each of the first through $n^{th}$ light source blocks LB1 through LB(n), each of the first sensing lines SL1 through SL(n), and the first light source driver 131. For example, a voltage that drops in each of the first light source block LB1, the first sensing line SL1 connected to the first light source block LB1, and the first light source driver 131 may be the same as a voltage that drops in each of the $n^{th}$ light source block LB(n), the first sensing line SL(n) connected to the $n^{th}$ light source block LB(n), and the first light source driver 131.

In addition, since the second sensing lines SL(n+1) through SL(2n) have the same second resistance value, the second driving voltage VLED2 provided from the second power supply unit 122 may drop to the same voltage value in each of the $(n+1)^{th}$ through $(2n)^{th}$ light source blocks LB(n+1) through LB(2n), each of the second sensing lines SL(n+1) through SL(2n), and the second light source driver 132. For example, a voltage that drops in each of the $(n+1)^{th}$ light source block LB(n+1), the second sensing line SL(n+1) connected to the $(n+1)^{th}$ light source block LB(n+1), and the second light source driver 132 may be the same as a voltage that drops in each of the $(2n)^{th}$ light source block LB(2n), the second sensing line SL(2n) connected to the $(2n)^{th}$ light source block LB(2n), and the second light source driver 132.

In addition, since the third sensing lines SL(2n+1) through SL(3n) have the same third resistance value, the third driving voltage VLED3 provided from the third power supply unit 123 may drop to the same voltage value in each of the $(2n+1)^{th}$ through $(3n)^{th}$ light source blocks LB(2n+1) through LB(3n), each of the third sensing lines SL(2n+1) through SL(3n), and the third light source driver 133. For example, a voltage that drops in each of the $(2n+1)^{th}$ light source block LB(2n+1), the third sensing line SL(2n+1) connected to the (2n+1)th light source block LB(2n+1), and the third light source driver 133 may be the same as a voltage that drops in each of the (3n)th light source block LB(3n), the third sensing line SL(3n) connected to the (3n)th light source block LB(3n), and the third light source driver 133.

Therefore, the backlight unit 100 according to the second embodiment further includes the third power supply unit 123 for applying the third driving voltage VLED3, the third sensing lines SL(2n+1) through SL(3n) having the third resistance value, and the third light source driver 130 for controlling a current flowing through the third sensing lines SL(2n+1) through SL(3n), compared with the backlight unit according to the first embodiment. That is, the backlight unit 100 according to the second embodiment requires more elements than the backlight unit according to the first embodiment but can further reduce power consumption compared with the first embodiment and improve its efficiency by efficiently preventing heat generation of the first through third light source drivers 131 through 133.

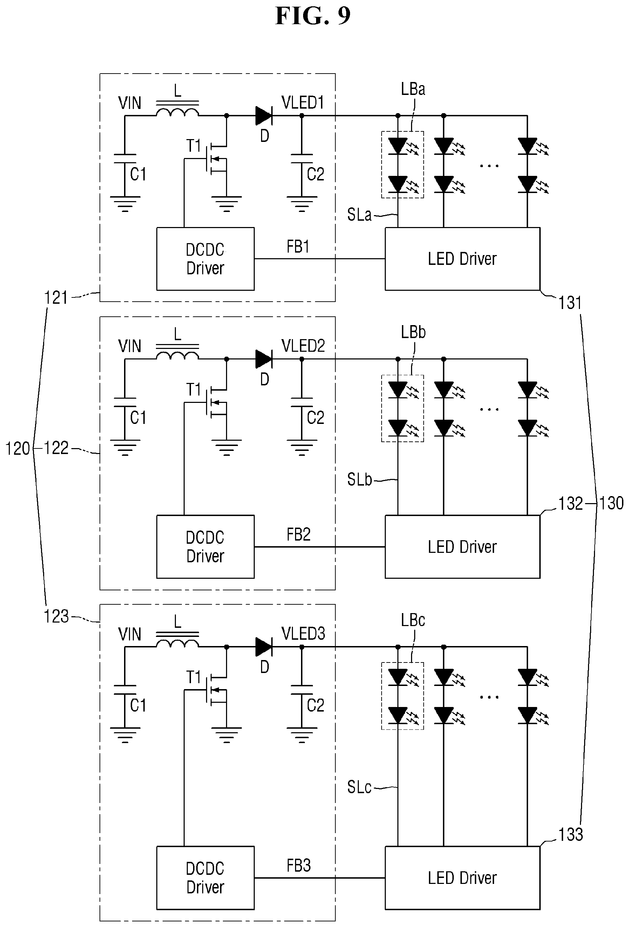

FIG. 9 is a circuit diagram of an example of the backlight unit illustrated in FIG. 7.

Referring to FIG. 9, the first power supply unit 121 may output the first driving voltage VLED1 by boosting a DC input voltage VIN. According to an example, the first power supply unit 121 may include a driving voltage controller DC-DC Driver. The driving voltage controller DC-DC Driver may turn on a first transistor T1 in response to the first feedback voltage FB1 received from the first light source driver 131. Here, the driving voltage controller DC-DC Driver may determine the magnitude of the first driving voltage VLED1 by adjusting the turn-on time of the first transistor T1 based on the first feedback voltage FB1. The first driving voltage VLED1 thus generated may be supplied in parallel to the light source blocks LBa disposed in the first area A1.

The second power supply unit 122 may output the second driving voltage VLED2 by boosting a DC input voltage VIN. According to an example, the second power supply unit 122 may include a driving voltage controller DC-DC Driver. The driving voltage controller DC-DC Driver may turn on a first transistor T1 in response to the second feedback voltage FB2 received from the second light source driver 132. Here, the driving voltage controller DC-DC Driver may determine the magnitude of the second driving voltage VLED2 by adjusting the turn-on time of the first transistor T1 based on the second feedback voltage FB2. The second driving voltage VLED2 thus generated may be supplied in parallel to the light source blocks LBb disposed in the second area A2.

The third power supply unit 123 may output the third driving voltage VLED3 by boosting a DC input voltage VIN. According to an example, the third power supply unit 123 may include a driving voltage controller DC-DC Driver. The driving voltage controller DC-DC Driver may turn on a first transistor T1 in response to the third feedback voltage FB3 received from the third light source driver 133. Here, the driving voltage controller DC-DC Driver may determine the magnitude of the third driving voltage VLED3 by adjusting the turn-on time of the first transistor T1 based on the third feedback voltage FB3. The third driving voltage VLED3 thus generated may be supplied in parallel to the light source blocks LBc disposed in the third area A3.

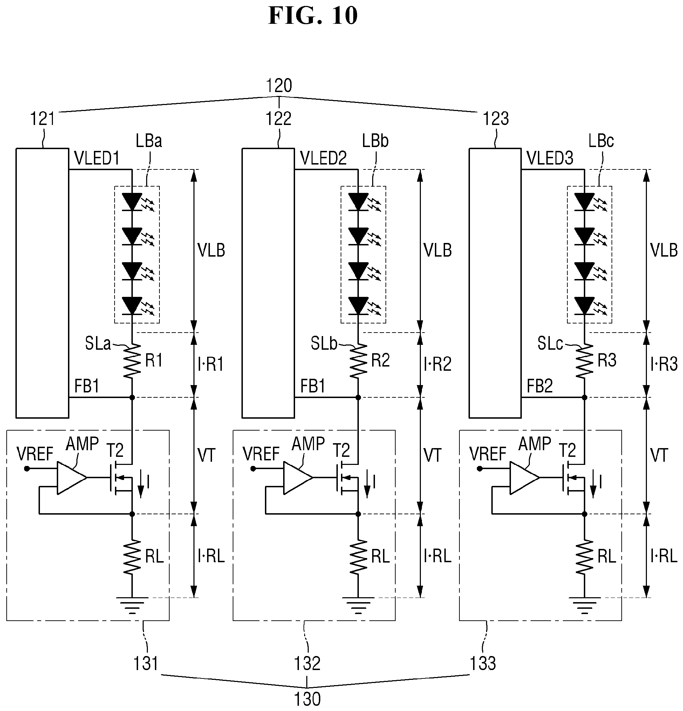

FIG. 10 is a circuit diagram illustrating a voltage drop of the backlight unit illustrated in FIG. 7.

Referring to FIG. 10, the first driving voltage VLED1 may be dropped by each of the first through nth light source blocks LBa, each of the first sensing lines SLa, and the first light source driver 131. Specifically, the first light source driver 131 may include a second transistor T2 and an amplifier AMP connected to a gate electrode of the second transistor T2. Therefore, the first light source driver 131 may control the turn-on of the second transistor T2 through the amplifier AMP so that a current $I$ of a certain magnitude flows through each of the first through nth light source blocks LBa, each of the first sensing lines SLa, and the first light source driver 131.

The second driving voltage VLED2 may be dropped by each of the (n+1)th through (2n)th light source blocks LBb, each of the second sensing lines SLb, and the second light source driver 132. Specifically, the second light source driver 132 may include a second transistor T2 and an amplifier AMP connected to a gate electrode of the second transistor T2. The second light source driver 132 may control the turn-on of the second transistor T2 through the amplifier AMP so that a current $I$ of a certain magnitude flows through each of the (n+1)th through (2n)th light source blocks LBb, each of the second sensing lines SLb, and the second light source driver 132.

The third driving voltage VLED3 may be dropped by each of the (2n+1)th through (3n)th light source blocks LBc, each of the third sensing lines SLc, and the third light source driver 133. Specifically, the third light source driver 133 may include a second transistor T2 and an amplifier AMP connected to a gate electrode of the second transistor T2. The third light source driver 133 may control the turn-on of the second transistor T2 through the amplifier AMP so that a current $I$ of a certain magnitude flows through each of the (2n+1)th through (3n)th light source blocks LBc, each of the third sensing lines SLc, and the third light source driver 133.

For example, the first driving voltage VLED1 may be dropped by a voltage VLB applied to each of the first through nth light source blocks LBa, a voltage $I*R1$ applied to the first sensing lines SLa, a voltage VT applied to the second transistor T2, and a voltage $I*RL$ applied to a load resistor RL (VLED1=VLB+I*R1+VT+I*RL). Like this, the first driving voltage VLED1 supplied in parallel to the first through nth light source blocks LBa may drop to the same magnitude in all the first sensing lines SLa.

In addition, the second driving voltage VLED2 may be dropped by a voltage VLB applied to each of the (n+1)th through (2n)th light source blocks LBb, a voltage $I*R2$ applied to the second sensing lines SLb, a voltage VT applied to the second transistor T2, and a voltage I*RL applied to a load resistor RL (VLED2=VLB+I*R2+VT+I*RL). Like this, the second driving voltage VLED2 supplied in parallel to the $(n+1)^{th}$ through $(2n)^{th}$ light source blocks LBb may drop to the same magnitude in all the second sensing lines SLb.

In addition, the third driving voltage VLED3 may be dropped by a voltage VLB applied to each of the $(2n+1)^{th}$ through $(3n)^{th}$ light source blocks LBc, a voltage I*R3 applied to the third sensing lines SLc, a voltage VT applied to the second transistor T2, and a voltage I*RL applied to a load resistor RL (VLED3=VLB+I*R3+VT+I*RL). Like this, the third driving voltage VLED3 supplied in parallel to the $(2n+1)^{th}$ through $(3n)^{th}$ light source blocks LBc may drop to the same magnitude in all the third sensing lines SLc.

Therefore, a difference between the first and second driving voltages VLED1 and VLED2 may correspond to a difference between the voltage I*R1 applied to the first sensing lines SLa and the voltage I*R2 applied to the second sensing lines SLb (VLED2-VLED1=I*R2-I*R1). In addition, a difference between the second and third driving voltages VLED2 and VLED3 may correspond to a difference between the voltage I*R2 applied to the second sensing lines SLb and the voltage I*R3 applied to the third sensing lines SLc (VLED3-VLED2=I*R3-I*R2).

As described above, since the first area A1 of the substrate 110 is disposed closer to the power supply units 120 and the light source drivers 130 than the second area A2 and the third area A3, the first sensing lines SL1 through SL(n) may have the same first resistance value R1, the second sensing lines SL(n+1) through SL(2n) may have the same second resistance value R2, and the third sensing lines SL(2n+1) through SL(3n) may have the same third resistance value R3. In addition, the first resistance value R1 may be designed to be smaller than the second resistance value R2, and the second resistance value R2 may be designed to be smaller than the third resistance value R3.

Therefore, the first power supply unit 121 may supply the first driving voltage VLED1 smaller than the second driving voltage VLED2 and the third driving voltage VLED3 to the first through $n^{th}$ light source blocks LB1 through LB(n) having the first resistance value R1, thereby minimizing power consumed in the first sensing lines SL1 through SL(n) and preventing heat generation of the first light source driver 131.

Likewise, the second power supply unit 122 may supply the second driving voltage VLED2 smaller than the third driving voltage VLED3 to the $(n+1)^{th}$ through $(2n)^{th}$ light source blocks LB(n+1) through LB(2n) having the second resistance value R2, thereby minimizing power consumed in the second sensing lines SL(n+1) through SL(2n) and preventing heat generation of the second light source driver 132.

In addition, the third power supply unit 123 may supply the third driving voltage VLED3 to each of the $(2n+1)^{th}$ through $(3n)^{th}$ light source blocks LB(2n+1) through LB(3n) respectively connected to the third sensing lines SL(2n+1) through SL(3n) having the sane third resistance value R3, thereby minimizing power consumed in the third sensing lines SL(2n+1) through SL(3n) and preventing heat generation of the third light source driver 133.

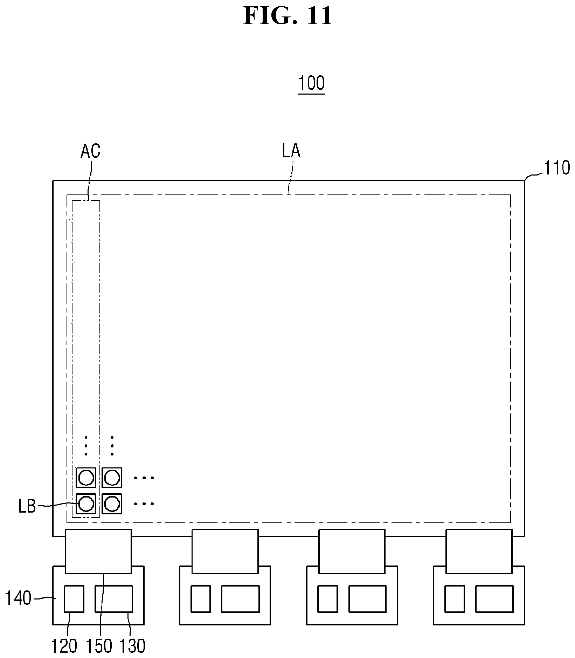

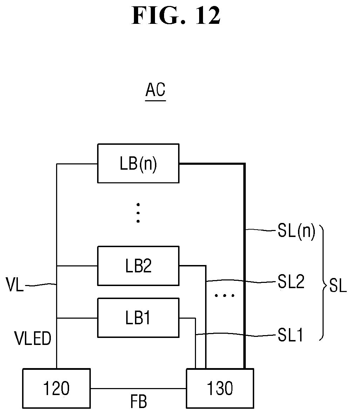

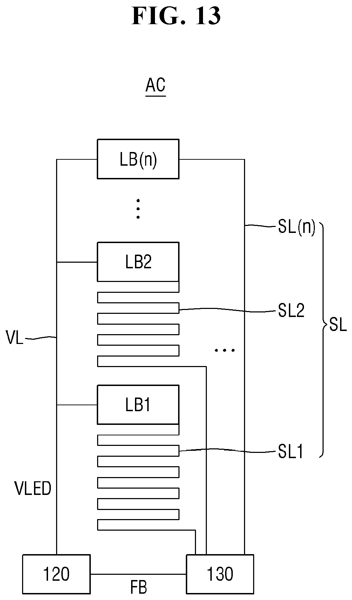

FIG. 11 is a plan view of a backlight unit according to a third embodiment in the display device illustrated in FIG. 1. FIG. 12 is an example diagram illustrating an area AC of FIG. 11 and a connection relationship in the area AC. FIG. 13 is another example diagram illustrating the area AC of FIG. 11 and the connection relationship in the area AC. The same elements as those described above will be briefly described or will not be described below.

Referring to FIGS. 11 and 12, a substrate 110 may include a light emitting area LA composed of a plurality of light source blocks LB. In addition, the light emitting area LA may include first through $n^{th}$ (where *n* is a natural number of 2 or more) light source blocks LB1 through LB(n).

Each of power supply units 120 may supply a driving voltage VLED to the light source blocks LB through power supply lines VL. Specifically, each of the power supply units 120 may receive a feedback voltage FB from a light source driver 130 and generate the driving voltage VLED based on the feedback voltage FB.

According to an embodiment, the first power supply lines VL1 respectively connected to the first through $n^{th}$ light source blocks LB1 through LB(n) may have the same resistance value. Therefore, the backlight unit 100 according to the present disclosure can minimize power consumed in the power supply lines VL.

Each of light source drivers 130 may control a current flowing through the light source blocks LB through sensing lines SL. For example, the light emitting area LA may include the first through $n^{th}$ light source blocks LB1 through LB(n), and the first through $n^{th}$ light source blocks LB1 through LB(n) may be connected to each of the light source drivers 130 through sensing lines SL1 through SL(n), respectively.

In FIG. 12, the sensing line SL1 connected to the first light source block LB1 may be shorter than the sensing line SL2 connected to the second light source block LB2. Like this, the sensing lines SL1 through SL(n) may be relatively long or short according to distances between the first through $n^{th}$ light source blocks LB1 through LB(n) and a light source driver 130, respectively.

The sensing lines SL1 through SLn may have the same resistance value. According to an example, the sensing lines SL1 through SL(n) may have different lengths according to positions of the first through $n^{th}$ light source blocks LB1 through LB(n), respectively. Since the sensing lines SL1 through SL(n) have different cross-sectional areas according to the lengths of the sensing lines SL1 through SL(n), respectively, they may have the same resistance value. In addition, since the sensing lines SL1 through SL(n) have cross-sectional areas proportional to the distances between the light source blocks LB and the light source driver 130, respectively, they may have the same resistance value.

In FIG. 13, the cross-sectional area and length of the sensing line SL1 connected to the first light source block LB1 may be the same as the cross-sectional area and length of the sensing line SL2 connected to the second light source block LB2. For example, since the sensing line SL1 connected to the first light source block LB1 is closer to a light source driver 130 than the sensing line SL2 connected to the second light source block LB2, it may be bent more than the sensing line SL2 connected to the second light source block LB2. Like this, since the sensing lines SL1 through SL(n) have the same cross-sectional area and length, they may have the same resistance value.

Since the sensing lines SL1 through SL(n) have the same resistance value as described above, the driving voltage VLED provided from a power supply unit 120 may drop to the same voltage value in each of the first through nth light source blocks LB1 through LB(n), each of the sensing lines SL1 through SL(n), and a light source driver 130. For example, a voltage that drops in each of the first light source block LB1, the sensing line SL1 connected to the first light source block LB1, and the light source driver 130 may be the same as a voltage that drops in each of the nth light source block LB(n), the sensing line SL(n) connected to the nth light source block LB(n), and the light source driver 130.

Therefore, the backlight unit 100 according to the third embodiment may have an optimal structure for power consumption and heat generation prevention by using relatively fewer elements than the first and second embodiments.

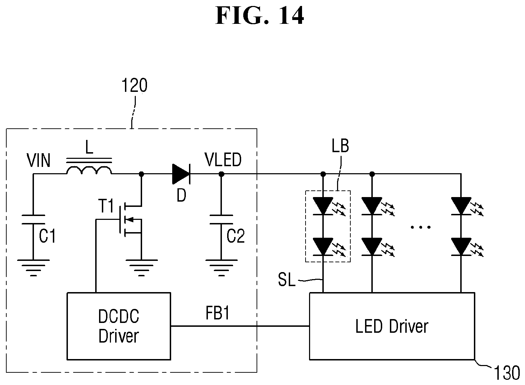

FIG. 14 is a circuit diagram of an example of the backlight unit illustrated in FIG. 11.

Referring to FIG. 14, a power supply unit 120 may output the driving voltage VLED by boosting a DC input voltage VIN. According to an example, the power supply unit 120 may include a driving voltage controller DC-DC Driver. The driving voltage controller DC-DC Driver may turn on a first transistor T1 in response to the feedback voltage FB received from a light source driver 130. Here, the driving voltage controller DC-DC Driver may determine the magnitude of the driving voltage VLED by adjusting the turn-on time of the first transistor T1 based on the feedback voltage FB. The driving voltage VLED thus generated may be supplied in parallel to the light source blocks LB.

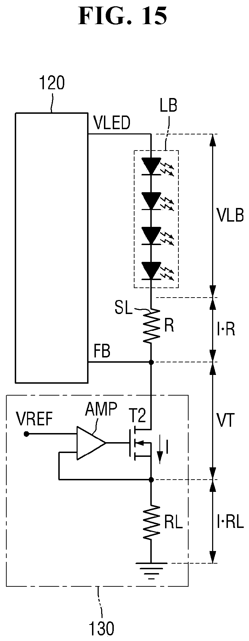

FIG. 15 is a circuit diagram illustrating a voltage drop of the backlight unit illustrated in FIG. 11.

Referring to FIG. 15, the driving voltage VLED may be dropped by each of the first through nth light source blocks LB, each of the sensing lines SL, and a light source driver 130. Specifically, the light source driver 130 may include a second transistor T2 and an amplifier AMP connected to a gate electrode of the second transistor T2. Therefore, the light source driver 130 may control the turn-on of the second transistor T2 through the amplifier AMP so that a current $I$ of a certain magnitude flows through each of the first through nth light source blocks LB, each of the first sensing lines SL, and the light source driver 130.

For example, the driving voltage VLED may be dropped by a voltage VLB applied to each of the first through nth light source blocks LB, a voltage I*R applied to the sensing lines SL, a voltage VT applied to the second transistor T2, and a voltage I*RL applied to a load resistor RL (VLED=VLB+I*R+VT+I*RL). Like this, the driving voltage VLED supplied in parallel to the first through nth light source blocks LB may drop to the same magnitude in all the sensing lines SL.

Therefore, a power supply unit 120 may supply the same driving voltage VLED to each of the first through nth light source blocks LB1 through LB(n) respectively connected to the sensing lines SL1 through SL(n) having the same resistance value R, thereby minimizing power consumed in the sensing lines SL1 through SL(n) and preventing heat generation of the light source driver 130.

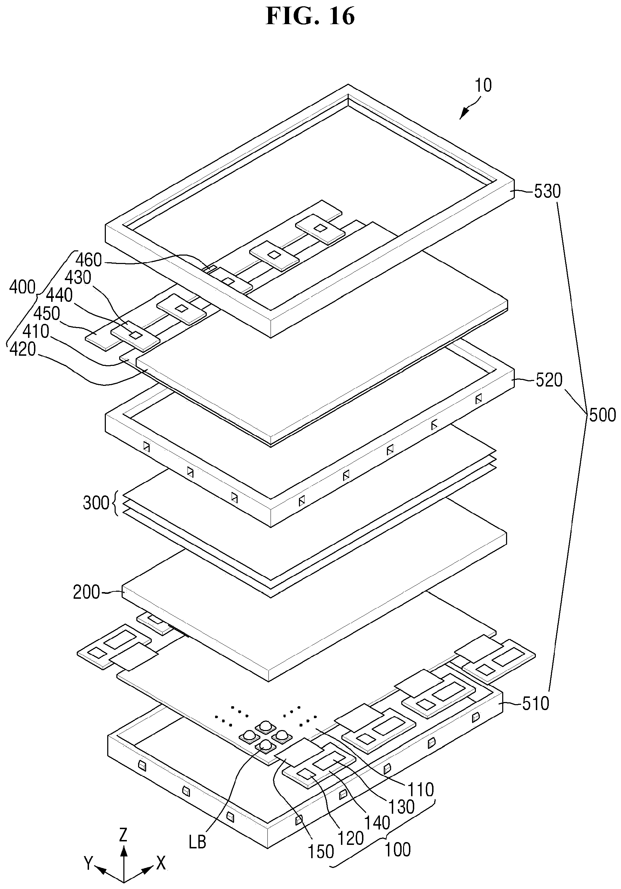

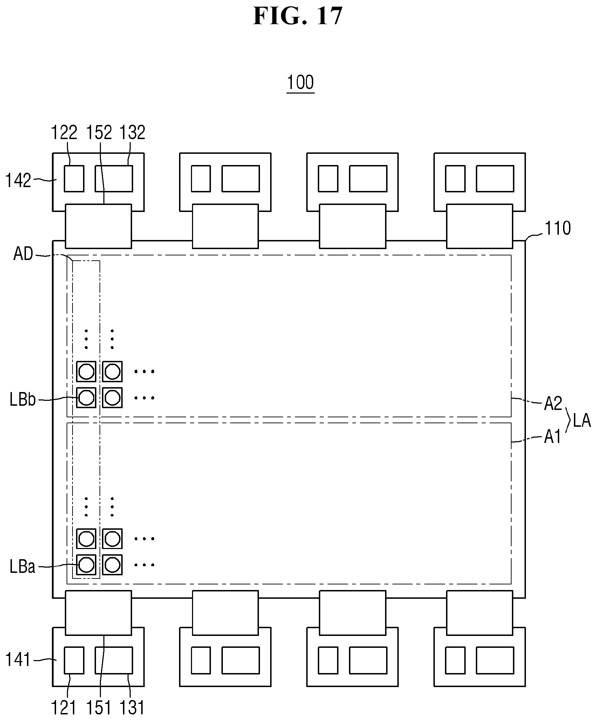

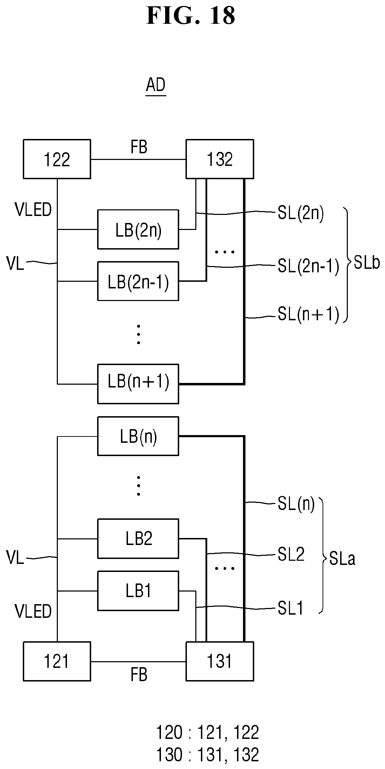

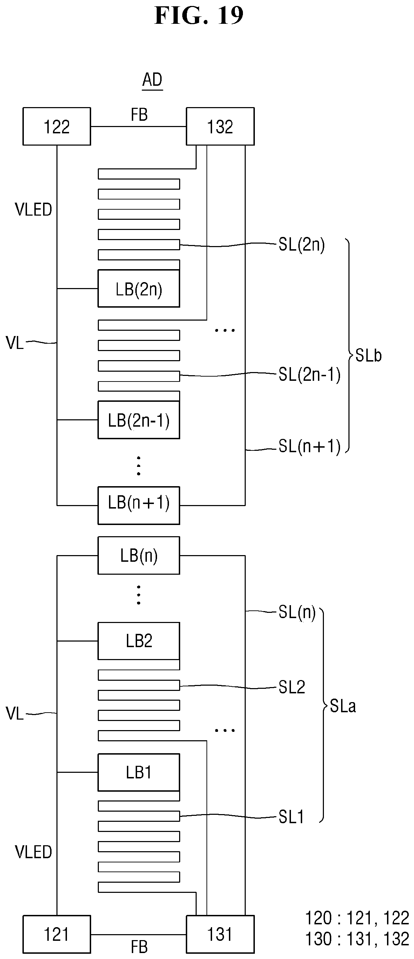

FIG. 16 is an exploded perspective view of a display device according to an embodiment. FIG. 17 is a plan view of a backlight unit according to a fourth embodiment in the display device illustrated in FIG. 16. Here, FIGS. 16 and 17 are different from the display device illustrated in FIGS. 1 and 2 in the configuration of power supply units 120, light source drivers 130, printed circuit boards 140, and a plurality of flexible films 150. Therefore, the same elements as those described above will be briefly described or will not be described. In addition, FIG. 18 is an example diagram illustrating an area AD of FIG. 16 and a connection relationship in the area AD. FIG. 19 is another example diagram illustrating the area AD of FIG. 16 and the connection relationship in the area AD.

Referring to FIGS. 16 through 19, the backlight unit 100 may include a substrate 110, the power supply units 120, the light source drivers 130, the printed circuit boards 140, and the flexible films 150.

The substrate 110 may include a light emitting area LA composed of a plurality of light source blocks LB. In addition, the light emitting area LA may include a first area A1 including a plurality of light source blocks LBa and a second area A2 including a plurality of light source blocks LBb. According to an example, the first area A1 may be adjacent to first power supply units 121 and first light source drivers 130 mounted on first printed circuit boards 141, and the second area A2 may be adjacent to second power supply units 122 and second light source drivers 132 mounted on second printed circuit boards 142.

The power supply units 120 may include the first and second power supply units 121 and 122. The first power supply units 121 may be disposed adjacent to the first area A1 of the substrate 110, and the second power supply units 122 may be disposed adjacent to the second area A2 of the substrate 110.

Each of the first power supply units 121 may supply a driving voltage VLED to the light source blocks LBa of the first area A1 through power supply lines VL, and each of the second power supply units 122 may supply a driving voltage VLED to the light source blocks LBb of the second area A2 through power supply lines VL. For example, the first and second voltage supply units 121 and 122 may supply the same driving voltage VLED to the light source blocks LBa of the first area A1 and the light source blocks LBb of the second area A2.

Specifically, each of the first power supply units 121 may receive a feedback voltage FB from a first light source driver 131 and generate the driving voltage VLED based on the feedback voltage FB. Each of the second power supply units 122 may receive a feedback voltage FB from a second light source driver 132 and generate the driving voltage VLED based on the feedback voltage FB.

According to an example, the power supply lines VL respectively connected to first through $n^{th}$ light source blocks LB1 through LB(n) may have the same resistance value, and the power supply lines VL respectively connected to $(n+1)^{th}$ through $(2n)^{th}$ light source blocks LB(n+1) through LB(2n) may have the same resistance value. Therefore, the backlight unit 100 according to the present disclosure can minimize power consumed in the power supply lines VL.

The light source drivers 130 may include the first and second light source drivers 131 and 132. The first light source drivers 131 may be disposed adjacent to the first area A1 of the substrate 110, and the second light source drivers 132 may be disposed adjacent to the second area A2 of the substrate 110.

Each of the first light source drivers 131 may control a current flowing through the light source blocks LBa of the first area A1 through first sensing lines SLa, and each of the second light source drivers 132 may control a current flowing through the light source blocks LBb of the second area A2 through second sensing lines SLb.

According to an example, the number of light source blocks LBa of the first area A1 may be, but not necessarily, equal to the number of light source blocks LBb of the second area A2. For example, the first area A1 may include the first through $n^{th}$ (where $n$ is a natural number of 2 or more) light source blocks LB1 through LB(n), and the second area A2 may include the $(n+1)^{th}$ through $(2n)^{th}$ light source blocks LB(n+1) through LB(2n). In addition, the first through $n^{th}$ light source blocks LB1 through LB(n) may be connected to each of the first light source drivers 131 through first sensing lines SL1 through SL(n), respectively, and the $(n+1)^{th}$ through $(2n)^{th}$ light source blocks LB(n+1) through LB(2n) may be connected to each of the second light source drivers 132 through second sensing lines SL(n+1) through SL(2n), respectively. Here, lengths of the first sensing lines SL1 through SL(n) may be the same as lengths of the second sensing lines SL(n+1) through SL(2n), respectively.

In FIG. 18, the first sensing line SL1 connected to the first light source block LB1 may be shorter than the first sensing line SL2 connected to the second light source block LB2. Like this, the first sensing lines SL1 through SL(n) may be relatively long or short according to distances between the first through $n^{th}$ light source blocks LB1 through LB(n) and a first light source driver 131, respectively. In addition, the second sensing line SL(n+1) connected to the $(n+1)^{th}$ light source block LB(n+1) may be shorter than the second sensing line SL(n+2) connected to the $(n+2)^{th}$ light source block LB(n+2). Like this, the second sensing lines SL(n+1) through SL(2n) may be relatively long or short according to distances between the $(n+1)^{th}$ through $(2n)^{th}$ light source blocks LB(n+1) through LB(2n) and a second light source driver 132, respectively.

The first sensing lines SL1 through SLn may have the same resistance value. According to an example, the first sensing lines SL1 through SL(n) may have different lengths according to positions of the first through $n^{th}$ light source blocks LB1 through LB(n), respectively. Since the first sensing lines SL1 through SL(n) have different cross-sectional areas according to the lengths of the first sensing lines SL1 through SL(n), respectively, they may have the same resistance value. In addition, since the first sensing lines SL1 through SL(n) have cross-sectional areas proportional to the distances between the light source blocks LBa of the first area A1 and the first light source driver 131, respectively, they may have the same resistance value.

The second sensing lines SL(n+1) through SL(2n) may have the same resistance value. According to an example, the second sensing lines SL(n+1) through SL(2n) may have different lengths according to positions of the $(n+1)^{th}$ through $(2n)^{th}$ light source blocks LB(n+1) through LB(2n), respectively. Since the second sensing lines SL(n+1) through SL(2n) have different cross-sectional areas according to the lengths of the second sensing lines SL(n+1) through SL(2n), respectively, they may have the same resistance value. In addition, since the second sensing lines SL(n+1) through SL(2n) have cross-sectional areas proportional to the distances between the light source blocks LBb of the second area A2 and the second light source driver 132, respectively, they may have the same resistance value.

In FIG. 19, the cross-sectional area and length of the first sensing line SL1 connected to the first light source block LB1 may be the same as the cross-sectional area and length of the first sensing line SL2 connected to the second light source block LB2. For example, since the first sensing line SL1 connected to the first light source block LB1 is closer to a first light source driver 131 than the first sensing line SL2 connected to the second light source block LB2, it may be bent more than the sensing line SL2 connected to the second light source block LB2. Like this, since the first sensing lines SL1 through SL(n) have the same cross-sectional area and length, they may have the same resistance value.

In addition, the cross-sectional area and length of the second sensing line SL(2n) connected to the $(2n)^{th}$ light source block LB(2n) may be the same as the cross-sectional area and length of the second sensing line SL(2n-1) connected to the $(2n-1)^{th}$ light source block LB(2n-1). For example, since the second sensing line SL(2n) connected to the $(2n)^{th}$ light source block LB(2n) is closer to a second light source driver 132 than the second sensing line SL(2n-1) connected to the $(2n-1)^{th}$ light source block LB(2n-1), it may be bent more than the sensing line SL(2n-1) connected to the $(2n-1)^{th}$ light source block LB(2n-1). Like this, since the second sensing lines SL(n+1) through SL(2n) have the same cross-sectional area and length, they may have the same resistance value.

Since the first sensing lines SL1 through SL(n) have the same resistance value as described above, the driving voltage VLED provided from a first power supply unit 121 may drop to the same voltage value in each of the first through n$^{th}$ light source blocks LB1 through LB(n), each of the first sensing lines SL1 through SL(n), and the first light source driver 131. For example, a voltage that drops in each of the first light source block LB1, the first sensing line SL1 connected to the first light source block LB1, and the first light source driver 131 may be the same as a voltage that drops in each of the n$^{th}$ light source block LB(n), the first sensing line SL(n) connected to the n$^{th}$ light source block LB(n), and the first light source driver 131.

In addition, since the second sensing lines SL(n+1) through SL(2n) have the same resistance value, the driving voltage VLED provided from a second power supply unit 122 may drop to the same voltage value in each of the (n+1)$^{th}$ through (2n)$^{th}$ light source blocks LB(n+1) through LB(2n), each of the second sensing lines SL(n+1) through SL(2n), and the second light source driver 132. For example, a voltage that drops in each of the (n+1)$^{th}$ light source block LB(n+1), the second sensing line SL(n+1) connected to the (n+1)$^{th}$ light source block LB(n+1), and the second light source driver 132 may be the same as a voltage that drops in each of the (2n)$^{th}$ light source block LB(2n), the second sensing line SL(2n) connected to the (2n)$^{th}$ light source block LB(2n), and the second light source driver 132.

Therefore, the backlight unit 100 according to the fourth embodiment requires more printed circuit boards 140 and flexible films 150 than the backlight unit according to the first embodiment but may reduce a maximum distance between the light source blocks BL and the first or second light source drivers 131 or 132 compared with the first through third embodiments. Accordingly, the resistance values of the second sensing lines SL(n+1) through SL(2n) of the backlight unit 100 according to the fourth embodiment may be smaller than the resistance values of the second sensing lines SL(n+1) through SL(2n) of the backlight units 100 according to other embodiments. Consequently, the backlight unit 100 according to the fourth embodiment can further reduce power consumption compared with the first through third embodiments and can improve its efficiency by efficiently preventing heat generation of the first and second light source drivers 131 and 132.

**Claims**

1. A backlight unit (100) comprising:

    a substrate (110) comprising a first area (A1) and a second area (A2), each having a plurality of light source blocks (LBa, LBb); and
    a light source driver (130) disposed on at least one side of the substrate and connected to the light source blocks (LBa, LBb) of each of the first and second areas through each of first and second sensing lines (SLa, SLb), wherein the first sensing lines (SL1,...,SLn) connected to each of the light source blocks (LB1, ..., LBn) of the first area each have a first resistance value (R1), and the second sensing lines (SLn+1,...SL2n) connected to each of the light source blocks (LBn+1, ..., LB2n) of the second area each have a second resistance value, **characterised in that** each of the first sensing lines have cross-sectional areas proportional to distances between each of the light source blocks of the first area and the light source driver, and each of the second sensing lines have cross-sectional areas proportional to distances between each of the light source blocks of the second area and the light source driver, wherein the first area is closer to the light source driver than the second area, and the first resistance value is smaller than the second resistance value, further comprising a power supply unit supplying a first driving voltage to the light source blocks of the first area and supplying a second driving voltage to the light source blocks of the second area, wherein the first driving voltage is smaller than the second driving voltage.

2. The backlight unit of claim 1, wherein a difference between the first and second driving voltages corresponds to a difference between a voltage applied to the first sensing lines and a voltage applied to the second sensing lines.

3. The backlight unit of claim 1, wherein the power supply unit generates the first and second driving voltages based on each of first and second feedback voltages received from the light source driver.

4. The backlight unit of claim 1, wherein the power supply unit supplies each of the first and second driving voltages through each of first and second power supply lines, and the first and second power supply lines have the same resistance value.

5. The backlight unit of claim 1, wherein the substrate further comprises a third area having a plurality of light source blocks, and the light source driver is connected to the light source blocks of the third area through third sensing lines having a third resistance value.

6. The backlight unit of claim 5, wherein the third sensing lines have different cross-sectional areas according to each of lengths of the third sensing lines.

7. The backlight unit of claim 5, further comprising a power supply unit providing first through third driving voltages to the light source blocks of the first through third areas based on first through third feedback voltages received from the light source driver.

8. The backlight unit of claim 1, wherein the light source driver comprises:

  a first light source driver disposed adjacent to the first area and connected to the light source blocks of the first area; and
  a second light source driver disposed adjacent to the second area and connected to the light source blocks of the second area.

9. The backlight unit of claim 1, wherein each of the light source blocks comprises at least one mini-light emitting diode (LED) or micro-LED.

10. A display device comprising:

  a display panel displaying an image; and
  a backlight unit irradiating light to the display panel,
  wherein the backlight unit comprises a backlight unit according to any one of the preceding claims.

**Patentansprüche**

1. Rückbeleuchtungseinheit (100), umfassend:

  ein Substrat (110), umfassend eine erste Fläche (A1) und eine zweite Fläche (A2), die jeweils eine Vielzahl von Lichtquellenblöcken (LBa, LBb) aufweisen; und
  einen Lichtquellentreiber (130), der auf zumindest einer Seite des Substrats angeordnet und über jede von einer ersten und einer zweiten Erfassungsleitung (SLa, SLb) mit den Lichtquellenblöcken (LBa, LBb) von jedem von der ersten und der zweiten Fläche verbunden ist,
  wobei die mit jedem der Lichtquellenblöcke (LB1, ..., LBn) der ersten Fläche verbundenen ersten Erfassungsleitungen (SL1, ..., SLn) jeweils einen ersten Widerstandswert (R1) aufweisen und die mit jedem der Lichtquellenblöcke (LBn+1, ..., LB2n) der zweiten Fläche verbundenen zweiten Erfassungsleitungen (SLn+1, ..., SL2n) jeweils einen zweiten Widerstandswert aufweisen,
  **dadurch gekennzeichnet, dass**
  jede der ersten Erfassungsleitungen Querschnittsflächen proportional zu Abständen zwischen jedem der Lichtquellenblöcke der ersten Fläche und des Lichtquellentreibers aufweist und jede der zweiten Erfassungsleitungen Querschnittsflächen proportional zu Abständen zwischen jedem der Lichtquellenblöcke der zweiten Fläche und des Lichtquellentreibers aufweist, wobei die erste Fläche näher an dem Lichtquellentreiber als die zweite Fläche ist und der erste Widerstandswert kleiner als der zweite Widerstandswert ist, ferner umfassend eine Leistungsversorgungseinheit, die den Lichtquellenblöcken der ersten Fläche eine erste Ansteuerspannung zuführt und den Lichtquellenblöcken der zweiten Fläche eine zweite Ansteuerspannung zuführt, wobei die erste Ansteuerspannung kleiner als die zweite Ansteuerspannung ist.

2. Rückbeleuchtungseinheit nach Anspruch 1, wobei eine Differenz zwischen der ersten und zweiten Ansteuerspannung einer Differenz zwischen einer Spannung, die an die ersten Erfassungsleitungen angelegt wird, und einer Spannung entspricht, die an die zweiten Erfassungsleitungen angelegt wird.

3. Rückbeleuchtungseinheit nach Anspruch 1, wobei die Leistungsversorgungseinheit die erste und zweite Ansteuerspannung basierend auf jeder von einer ersten und einer zweiten Rückkopplungsspannung erzeugt, die von dem Lichtquellentreiber empfangen werden.

4. Rückbeleuchtungseinheit nach Anspruch 1, wobei die Leistungsversorgungseinheit jede von der ersten und zweiten Ansteuerspannung über jede von einer ersten und zweiten Leistungsversorgungsleitung bereitstellt und die erste und zweite Leistungsversorgungsleitung den gleichen Widerstandswert aufweisen.

**5.** Rückbeleuchtungseinheit nach Anspruch 1, wobei das Substrat ferner eine dritte Fläche mit einer Vielzahl von Lichtquellenblöcken umfasst und der Lichtquellentreiber über dritte Erfassungsleitungen mit einem dritten Widerstandswert mit den Lichtquellenblöcken der dritten Fläche verbunden ist.

**6.** Rückbeleuchtungseinheit nach Anspruch 5, wobei die dritten Erfassungsleitungen unterschiedliche Querschnittsflächen gemäß jeder der Längen der dritten Erfassungsleitungen aufweisen.

**7.** Rückbeleuchtungseinheit nach Anspruch 5, ferner umfassend eine Leistungsversorgungseinheit, die erste bis dritte Ansteuerspannungen an die Lichtquellenblöcke der ersten bis dritten Fläche basierend auf ersten bis dritten Rückkopplungsspannungen bereitstellt, die von dem Lichtquellentreiber empfangen werden.

**8.** Rückbeleuchtungseinheit nach Anspruch 1, wobei der Lichtquellentreiber Folgendes umfasst:

einen ersten Lichtquellentreiber, der benachbart zu der ersten Fläche angeordnet ist und mit den Lichtquellenblöcken der ersten Fläche verbunden ist; und
einen zweiten Lichtquellentreiber, der benachbart zu der zweiten Fläche angeordnet ist und mit den Lichtquellenblöcken der zweiten Fläche verbunden ist.

**9.** Rückbeleuchtungseinheit nach Anspruch 1, wobei jeder der Lichtquellenblöcke zumindest eine Mini-lichtemittierende Diode (LED) oder Mikro-LED umfasst.

**10.** Anzeigevorrichtung, umfassend:

eine Anzeigetafel, die ein Bild anzeigt; und
eine Rückbeleuchtungseinheit, die Licht auf die Anzeigetafel strahlt,
wobei die Rückbeleuchtungseinheit eine Rückbeleuchtungseinheit gemäß einem der vorhergehenden Ansprüche umfasst.

**Revendications**

**1.** Unité de rétroéclairage (100) comprenant :

un substrat (110) comprenant une première zone (A1) et une deuxième zone (A2), chacune comportant une pluralité de blocs de source de lumière (LBa, LBb) ; et
un pilote de source de lumière (130) disposé sur au moins un côté du substrat et connecté aux blocs de source de lumière (LBa, LBb) de chacune des première et deuxième zones à travers chacune des première et deuxième lignes de détection (SLa, SLb),
lesdites premières lignes de détection (SL1, ..., SLn) connectées à chacun des blocs de source de lumière (LB1, ..., LBn) de la première zone présentant chacune une première valeur de résistance (R1), et les deuxièmes lignes de détection (SLn+1, ..., SL2n) connectées à chacun des blocs de source de lumière (LBn+1, ..., LB2n) de la deuxième zone présentant chacune une deuxième valeur de résistance,
**caractérisée en ce que**
chacune des premières lignes de détection comporte des zones de section transversale proportionnelles aux distances entre chacun des blocs de source de lumière de la première zone et le pilote de source de lumière, et chacune des deuxièmes lignes de détection comporte des zones de section transversale proportionnelles aux distances entre chacun des blocs de source de lumière de la deuxième zone et le pilote de source de lumière, ladite première zone étant plus proche du pilote de source de lumière que la deuxième zone, et ladite première valeur de résistance étant inférieure à la deuxième valeur de résistance, comprenant en outre une unité d'alimentation électrique fournissant une première tension de commande aux blocs de source de lumière de la première zone et fournissant une seconde tension de commande aux blocs de source de lumière de la deuxième zone, ladite première tension de commande étant inférieure à ladite seconde tension de commande.

**2.** Unité de rétroéclairage de la revendication 1, la différence entre les première et seconde tensions de commande correspondant à la différence entre une tension appliquée aux premières lignes de détection et une tension appliquée aux deuxièmes lignes de détection.

**3.** Unité de rétroéclairage de la revendication 1, ladite unité d'alimentation électrique générant les première et seconde tensions de commande sur la base de chacune des première et deuxième tensions de rétroaction reçues du pilote de source de lumière.

Unité de rétroéclairage de la revendication 1, ladite unité d'alimentation électrique fournissant chacune des première et seconde tensions de commande à travers chacune des première et seconde lignes d'alimentation électrique, et lesdites première et seconde lignes d'alimentation électrique présentant la même valeur de résistance.

**5.** Unité de rétroéclairage de la revendication 1, ledit substrat comprenant en outre une troisième zone comportant une pluralité de blocs de source de lumière, et ledit pilote de source de lumière étant connecté aux blocs de source de lumière de la troisième zone par l'intermédiaire de troisièmes lignes de détection présentant une troisième valeur de résistance.

**6.** Unité de rétroéclairage de la revendication 5, lesdites troisièmes lignes de détection comportant des zones de section transversale différentes en fonction de chacune des longueurs des troisièmes lignes de détection.

**7.** Unité de rétroéclairage de la revendication 5, comprenant en outre une unité d'alimentation électrique fournissant des première à troisième tensions de commande aux blocs de source de lumière des première à troisième zones sur la base des première à troisième tensions de rétroaction reçues du pilote de source de lumière.

**8.** Unité de rétroéclairage de la revendication 1, ledit pilote de source de lumière comprenant :

un premier pilote de source de lumière disposé adjacent à la première zone et connecté aux blocs de source de lumière de la première zone ; et
un second pilote de source de lumière disposé adjacent à la deuxième zone et connecté aux blocs de source de lumière de la deuxième zone.

**9.** Unité de rétroéclairage de la revendication 1, chacun des blocs de source de lumière comprenant au moins une mini diode électroluminescente (DEL) ou une micro DEL.

**10.** Dispositif d'affichage comprenant :

un panneau d'affichage affichant une image ; et
une unité de rétroéclairage irradiant de la lumière vers le panneau d'affichage,
ladite unité de rétroéclairage comprenant une unité de rétroéclairage selon l'une quelconque des revendications précédentes.

# FIG. 1

# FIG. 2

<u>100</u>

# FIG. 3

<u>AA</u>

# FIG. 4

LB(k)

a(k)

ℓ(k)

130

# FIG. 5

# FIG. 6

# FIG. 7

<u>100</u>

# FIG. 8

AB

# FIG. 9

# FIG. 10

## FIG. 11

<u>100</u>

AC · · · LA · · · 110

LB

140

120 150 130

# FIG. 12

AC

# FIG. 13

AC

## FIG. 14

# FIG. 15

# FIG. 16

# FIG. 17

100

# FIG. 18

<u>AD</u>

120 : 121, 122
130 : 131, 132

# FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013169190 A1
- US 2010295876 A1
- CN 109116626 A
- KR 20130047463 A